(19) Europäisches Patentamt
European Patent Office
Office européen des brevets

(11) Numéro de publication: 0 145 517
B1

(12) # FASCICULE DE BREVET EUROPÉEN

(45) Date de publication du fascicule du brevet: 13.01.88

(51) Int. Cl.⁴: **B 01 D 53/34**, C 01 B 21/40

(21) Numéro de dépôt: 84401831.7

(22) Date de dépôt: 14.09.84

(54) **Procédé de traitement d'un courant gazeux contenant des oxydes d'azote.**

(30) Priorité: 21.09.83 FR 8314984

(43) Date de publication de la demande: 19.06.85 Bulletin 85/25

(45) Mention de la délivrance du brevet: 13.01.88 Bulletin 88/2

(84) Etats contractants désignés: AT BE CH DE FR GB IT LI LU NL SE

(56) Documents cité:
EP-A-0 006 488
EP-A-0 047 191
FR-A-1 578 561

(73) Titulaire: RHONE- POULENC CHIMIE, 25, quai Paul Doumer, F-92408 Courbevoie Cédex (FR)

(72) Inventeur: Botton, Roger, 32, rue Garibaldi, F-69006 Lyon (FR)
Inventeur: Roiron, Jacques, La Sauvag, F-69360 Ternay (FR)

(74) Mandataire: Dubruc, Philippe, RHONE- POULENC INTERSERVICES Service Brevets Chimie 25, quai Paul- Doumer, F-92408 Courbevoie Cédex (FR)

EP 0 145 517 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

La présente invention a trait à un procédé de traitement d'un courant gazeux contenant des oxydes d'azote et de l'oxygène. Elle concerne plus particulièrement la séparation des oxydes d'azote du courant gazeux les contenant et l'application de ce procédé à l'épuration des gaz résiduaires.

On a cherché depuis longtemps à éliminer les oxydes d'azote provenant de la fabrication de l'acide nitrique par passage de ces oxydes dans des colonnes à plateaux constituant un système d'absorption/oxydation.

Ainsi, dans le document FR-A-1 255 373, on a préconisé d'améliorer l'efficacité des colonnes d'absorption en réduisant l'espacement entre les premiers plateaux et en augmentant au contraire l'espacement entre les derniers plateaux.

Ce procédé se basait sur l'hypothèse selon laquelle, dans les premiers plateaux, se faisait l'échange entre les gaz riches en oxyde d'azote et le liquide riche en acide nitrique, alors que les derniers plateaux recevaient un gaz appauvri en oxyde d'azote et un liquide pauvre en acide nitrique ou de l'eau pure.

Cette conception impliquait que le fonctionnement d'une colonne repose sur les deux réactions fondamentales suivantes:

- oxydation en phase gazeuse entre les plateaux

$$NO + 1/2\,O_2 \rightarrow NO_2$$

- absorption du $NO_2$ sur le plateau

$$3\,NO_2 + H_2O \rightleftarrows 2\,HNO_3 + NO$$

Il en résultait une conception des colonnes liée à la cinétique et à la thermodynamique de cés réactions, c'est-à-dire:

- nombre de plateaux élevé pour obtenir une stratification du titre des acides favorisant l'approche de l'équilibre,
- intervalle entre plateaux suffisant pour oxyder le NO qui se forme.

De ce fait, pour obtenir une bonne efficacité dans le domaine des basses teneurs en $NO + NO_2$, ci-après désigné par $NO_x$ (inférieure à 6000 vpm par exemple en atelier nitrique travaillant à $4.10^5$ Pa), domaine où la cinétique d'oxydation du NO est très lente, on a cherché à espacer de plus en plus les plateaux et à choisir un rapport R élevé (R = rapport du volume de colonne compris entre deux plateaux successifs au volume occupé par l'émulsion gaz-liquide entre ces deux plateaux), habituellement supérieur à 7 et souvent bien au-delà.

Mais il est arrivé un moment où, même avec des valeurs de R très importantes, la réoxydation de NO en $NO_2$ est devenu négligeable, c'est-à-dire que l'efficacité d'absorption des plateaux installés tend vers zéro, et il est devenu impossible de descendre en-dessous d'un certain seuil.

C'est ce qui a amené la demanderesse, dans le document EP-A-47 191 à revendiquer un procédé qui permette d'abaisser la teneur en $NO_x$ de façon notable dans un appareil industriel.

Il est apparu à la demanderesse que, lorsque la pression partielle des $NO_x$ dans le gaz est faible (par exemple inférieure à 6000 vpm sous $4.\ 10^5$ Pa), le phénomène global d'oxydo-absorption, dans les solutions diluées d'acide nitrique, est limité par une réaction en phase liquide et l'évolution de $HNO_2$ en $HNO_3$ devient alors l'étape limitante du procédé.

Le concept du procédé revendiqué consistait donc à favoriser la disparition en phase liquide de $HNO_2$ par sa transformation en $HNO_3$ et, par ce fait, allait à l'encontre des hypothèses admises et donc apparaissait comme une rupture de demarche vis-à-vis de l'état de la technique.

Toutefois, il est apparu une nouvelle limitation qui, bien qu'à seuil plus faible, empêchait d'atteindre de très faibles valeurs de $NO_x$ dans les gaz résiduaires.

On sait également, notamment par le brevet FR-A-1 578 561, qu'il y a de grandes difficultés à purifier un gaz lorsque la teneur en NO est supérieure à celle en $NO_2$, et que pour cette raison, il y a intérêt à ramener le rapport $NO/NO_2$ à une valeur proche de 1 par oxydation des NO avant de procéder à l'adsorption. Toutefois, le procédé décrit dans ce brevet présente de nombreux inconvénients.

D'une part, l'oxydation n'a pas lieu "in situ" dans l'adsorbeur mais sur une ligne parallèle à l'installation; ceci nécessite donc un appareillage complémentaire compliqué, volumineux et coûteux.

D'autre part, cette oxydation se fait en utilisant des catalyseurs du type charbon actif ou silicagel rendant le procédé peu utilisable industriellement.

Enfin, il est indiqué que l'agent adsorbant utilisé est une solution alcaline; il y a donc consommation d'un alcalin et restitution d'un effluent liquide qui reste à valoriser.

On connait enfin par la demande de brevet européen EP-A-8 488 un procédé d'élimination des $NO_x$ d'un courant gazeux avec une solution d'acide nitrique chargée en $H_2O_2$ dans des proportions bien spécifiques. Toutefois, les solutions d'acide nitrique utilisées présentent des normalités élevées, supérieures à 6, ce qui fait que le procédé décrit est conduit dans des conditions telles qu'il y a une consommation d'eau oxygénée élevée et inutile et une efficacité faible au niveau de l'élimination des $NO_x$.

L'objet de la présente invention est donc un procédé qui permet d'abaisser le seuil final en $NO_x$ jusqu'à des

valeurs de 200 vpm ou moins, en traitant des gaz ayant une faible teneur en $NO_x$.

L'objet de l'invention a aussi trait à la définition d'une cellule de réoxydation de NO particulièrement efficace et économique.

L'objet de l'invention est aussi un traitement de n'importe quel ggaz contenant des vapeurs nitreuses, quelle qu'en soit l'origine (composition, débit, pression, etc.....).

De manière générale, la présente invention a trait à un procédé d'oxydo-réduction des oxydes d'azote contenus dans un courant gazeux conjointement à l'oxygène, dans un dispositif de contact gaz-liquide à contrecourant.

Le concept de l'invention consiste à se placer dans des conditions qui favorisent la transformation en phase liquide de $HNO_2$ en $HNO_3$ et à provoquer une oxydation du milieu.

Concrètement:

a) pour des valeurs du rapport $NO/NO_2$ supérieures à 1, on augmente le rapport K du volume de rétention liquide en $m^3$ au débit du courant gazeux en $Nm^3$/heure, de façon que les $NO_x$ s'absorbent préférentiellement selon la réaction (2):

(2) $NO + NO_2 + H_2O \rightarrow 2H\ NO_2$ (phase liquide)

b) on provoque ensuite une oxydation du milieu gazeux de manière à diminuer les valeurs du rapport $NO/NO_2$ et à se replacer dans les conditions de l'étape (a), cette oxydation étant réalisée par apport d'acide nitrique et d'eau oxygénée avec comme condition qu'on apporte celle-ci de telle sorte que le point représentatif de la concentration (V) en volume de $H_2O_2$ par rapport à la normalité (N) de la solution nitrique d'$H_2O_2$ soit situé dans une zone (B) située au-dessus de la courbe (C1) qui fait correspondre à chaque valeur de (V) une valeur minimale de (N), valeur minimale en-dessous de laquelle il n'y a pas oxydation de NO en $NO_2$, et de la courbe (C2) qui fait correspondre à chaque valeur de (V) une valeur maximale de (N), valeur maximale au-dessus de laquelle il y a apparition de $NO_2$ en phase gazeuse,

c) et on répète au moins une fois l'étape (a)

On a en effet observé que lorsque le rapport $NO/NO_2$ devient supérieur à 1, la réaction (2) l'emporte

(2) $NO + NO_2 + H_2O \rightarrow 2\ HNO_2$ (phase liquide)

on favorise cette réaction (2) en augmentant le rapport K du volume de rétention liquide en $m^3$, au débit du courant gazeux en $Nm^3$/heure, de façon à appauvrir le gaz en $NO_x$. On provoque ensuite une oxydation du milieu de manière à diminuer les valeurs du rapport $NO/NO_2$ et à se replacer dans les conditions de l'étape (a).

Si initialement le rapport $NO/NO_2$ est inférieur à 1, on abaisse d'abord la teneur en $NO_x$ du courant gazeux dans la zone où cette teneur est suffisament forte pour que l'absorption du $NO_x$ selon la réaction (1) suivante soit prédominante

(1) $NO_2 + 1/3\ H_2O \rightarrow 2/3\ HNO_3 + 1/3\ NO$ (phase liquide)

Le concept de l'invention s'applique à toutes les émissions de vapeur nitreuse, quel que soit le rapport $NO/NO_2$ initial.

Mais l'invention s'applique, en particulier, au cas du traitement d'un gaz dans une colonne à plateaux.

La demanderesse, lors de travaux importants, a en effet montré que le fonctionnement d'une colonne, dans le cadre d'une oxydo-réduction de $NO_x$ pouvait être schématisé en trois zones (voir figure 1).

Dans la zone I, les conditions opératoires sont telles que la vitesse d'oxydation est suffisante, en phase gazeuse, pour maintenir un rapport $NO/NO_2$ tel que l'absorption selon l'équation (1) soit prédominante.

Pratiquement, ceci correspond à une étape au cours de laquelle on abaisse la teneur en $NO_x$ du courant gazeux par tout moyen connu et de manière simple, en favorisant l'oxydation du NO en $NO_2$ en phase gazeuse entre les plateaux et l'absorption du $NO_2$ sur les plateaux.

Dans cette zone, l'efficacité de la colonne ne dépend pratiquement pas de la valeur du rapport K.

Dans la zone II, par contre, le couple $NO_x$, $NO/NO_2$ est tel que la réaction d'absorption (2) est prédominante et que l'oxydation en phase gazeuse se ralentit. $NO_x$ baisse de plus en plus lentement, $NO_2$ n'est pas remplacé. $HNO_2$ a tendance à se dismuter (transformer) selon l'equation (3):

(3) $HNO_2 \rightarrow 1/3\ HNO_3 + 2/3\ NO + 1/3\ H_2O$

L'étape (a) du procédé va donc consister à mettre à profit les caractéristiques de cette zone et à améliorer l'oxydo-absorption en phase liquide pour éviter la réaction (3), donc le dégagement de NO et limiter la vitesse d'accroissement du rapport $NO/NO_2$.

On augmente donc la valeur de K pour assurer l'oxydation directe de $HNO_2$ en $HNO_3$ selon la réaction (4):

(4) $HNO_2 + 1/2\,O_2 \rightarrow HNO_3$

au détriment de la réaction (3).

On pourra notamment utiliser des valeurs de K correspondant à celles indiquées dans le document EP-A-47 191, c'est-à-dire K supérieur à 5. $10^{-4}$ heure pour une teneur en $NO_x$ dans le courant gazeux de 6 000 vpm et K superieur à 3,5. $10^{-4}$ heure pour 2 500 vpm.

Au cours de l'absorption, le rapport $NO/NO_2$ continue à augmenter et la vitesse d'absorption, selon la réaction (2), devient très faible.

On entre dans la zone III où l'augmentation de la valeur de K ne permet plus d'abaisser la teneur en $NO_x$ de façon sensible.

Le concept de l'invention réside alors dans le fait de se replacer, au cours d'une étape (c), dans les conditions de l'étape (a) au moyen d'une étape (b) qui consiste à abaisser le rapport $NO/NO_2$ par oxydation.

A la figure 1, on a représenté schématiquement et qualitativement le fonctionnement d'une colonne selon l'invention.

Le point $A_0$ représente le point de départ situé dans l'étape (a).

Cette étape est réalisée jusqu'au point $A_1$ par tout moyen connu classique.

Ce point marque la limite pratique de fonctionnement d'une telle colonne.

On élève alors la valeur de K, de manière à augmenter le temps de séjour de la solution aqueuse dans la partie correspondante du dispositif (ou colonne).

Le point de fonctionnement va décrire la courbe $A_0A_2$ jusqu'à ce que ce moyen, à son tour, devienne inopérant à l'approche de la zone III.

A ce moment, on établit une étape d'oxydation qui ramène le point de fonctionnement en $B_1$.

On peut alors, à nouveau, augmenter le temps de séjour de la solution aqueuse en jouant sur la valeur de K et décrire la courbe $B_1A_3$.

De manière inattendue, le moyen s'avère répétitif. C'est-à-dire que l'on peut encore redécrire une boucle telle que $A_3B_2A_4$.

Bien évidemment, on ne sortirait pas du cadre de l'invention en n'allant pas jusqu'à l'appauvrissement maximal à l'étape (b), en s'arrêtant par exemple en $A_j$ et en suivant le fonctionnement correspondant à $B_j$.

Selon l'invention, il faut éviter de se situer dans la zone III et un moyen simple d'y parvenir consiste à provoquer une oxydation du milieu.

Grâce à l'ensemble des étapes du procédé de l'invention, cette absorption des $NO_x$ peut se faire de manière économique:

- la réalisation de l'étape (a) permet de diminuer le volume des dispositifs d'absorption;
- le fait de n'utiliser une oxydation que dans l'étape (b) autorise de ne faire appel qu'à une quantité très limitée d'oxydant.

Les oxydants peuvent être amenés, par exemple, par pulvérisation sur un plateau et/ou au moyen d'une boucle de recirculation.

Dans le cas où l'on réoxyde par l'acide nitrique, selon l'invention, on peut réoxyder le NO en $NO_2$ sans augmenter sensiblement la teneur globale en $NO_x$, contrairement à ce que laisse prévoir la réaction (1) en faisant appel à un ensemble d'un étage de pulvérisation, suivi d'un étage d'oxydo-absorption selon la description du document EP-A-47 191.

Alors qu'est connu en soi le rôle oxydant de l'eau oxygénée, l'oxydation des oxydes d'azote par cet agent n'était pas, jusqu'à ce jour, utilisée à l'échelle industrielle car les techniques proposées aboutissaient à une consommation en $H_2O_2$ prohibitive.

Or, le procedé selon l'invention permet de palier cet inconvénient en se situant dans des conditions bien précises de mise en oeuvre de l'eau oxygénée.

Les travaux de la demanderesse ont, en effet, mis en évidence qu'il y a nécessité de mettre en oeuvre un couple $H_2O_2$, $NO_3$ approprié pour obtenir la transformation de NO en $HNO_3$.

Comme on peut le voir sur la figure 2, l'eau oxygénée peut ne pas être efficace du point de vue de cette transformation.

Sur cette figure, on a representé V = concentration en volume en $H_2O_2$ et N, normalité de la solution nitrique d'$H_2O_2$.

$C_1$ représente la courbe qui fait correspondre à chaque valeur de V une valeur seuil de N.

$C_2$ représente la courbe d'apparition de $NO_2$ en phase gazeuse.

Dans la zone A, en-dessous de la courbe $C_1$, la seule action possible de l'eau oxygénée est celle relative à la reaction

$$HNO_2 + 1/2\,O_2 \rightarrow HNO_3$$

mais il n'y a pas oxydation de NO en $NO_2$, et, de plus, il y a inhibition de la vitesse d'oxydo-absorption de NO par $HNO_3$.

Dans la zone B, située en-dessus de la courbe $C_1$ et en-dessus de $C_2$, NO est oxydé en surface par $HNO_3$; il y a alors formation de $HNO_2$ et oxydation totale en $HNO_3$.

Dans la zone C, il y a dégagement de $NO_2$; plus on va vers une normalité de la solution nitrique élevée et plus on se rapproche de l'équilibre d'oxydation de NO par $HNO_3$ sans toutefois l'atteindre; tout se passe comme si le $HNO_2$ formé se décomposait avant d'avoir eu le temps de s'oxyder.

Il faut donc se situer dans la zone B pour optimiser l'utilisation d'eau oxygénée.

Ainsi, la présente invention permet une augmentation significative de l'efficacité d'un traitement par $H_2O_2$.

Un moyen commode consiste à introduire, par pulvérisation, l'oxydant, par exemple un mélange $HNO_3$, $H_2O_2$, entre deux plateaux fonctionnant selon l'étape b, soit directement, soit par l'intermédiaire d'une boucle de recirculation.

Avantageusement, dans le premier cas, la pulvérisation doit être conduite de telle manière que les gouttes du mélange aient réagi avant d'atteindre l'émulsion du plateau inférieur.

Dans le second cas avec recirculation, la surverse du plateau correspondant, isolée spécifiquement pour cette opération, sera injectée plusieurs plateaux en dessous, de façon à ce que l'eau oxygénée résiduelle se retrouve sur un plateau de concentration en acide nitrique plus élevée, pour s'éloigner de la courbe d'inhibition.

Mais la présente invention sera plus aisément comprise à l'aide des exemples suivants, donnés à titre indicatif mais nullement limitatif.

Les figures 3 et 4 donnent deux exemples de mode de réalisation d'introduction par pulvérisation d'un mélange $H_2O_2 + HNO_3$, conformément à l'invention, dans lesquels An, An + 1, An + 2 et An + 3 représentent les plateaux d'une colonne d'oxydo-absorption, avec fig. 3 réinjection en amont selon 1.

Afin de mettre en évidence les avantages de la présente invention, on a effectué, de manière comparative, un traitement avec:

- un dispositif classique du type de celui décrit dans le FR 1 255 373
- un dispositif selon EP-A-47 191
- un dispositif mettant en oeuvre l'invention, soit avec un étage d'oxydation par $HNO_3$, soit avec un étage $HNO_3$ + un étage $H_2O_2$.

Les conditions opératoires sont les suivantes:

| | |
|---|---|
| - pression: | $4.10^5$ Pa |
| - température: | 30°C |
| - gaz à traiter | teneur en $NO_x$ = 1200 vpm |
| (issu d'un atelier | teneur en oxygène = 3,5 % en volume |
| nitrique standard) | rapport $NO/NO_2 = 2$ |

les gaz circulant de bas en haut dans une colonne cylindrique de 13 m de haut, équipée de 13 plateaux perforés, distants de 1 m et ayant un diamètre tel que la vitesse réelle des gaz soit de 0,23 m/s.

L'eau de procédé est introduite en haut de colonne; elle ressort en fond de colonne avec une teneur en acide fonction des $NO_x$ récupérés (1 à 3 %); le débit est tel que le rapport eau/gaz, exprimé en litre/$Nm^3$, soit de 0,11.

Le tableau ci-après permet de comparer les performances et les consommations équivalentes des divers dispositifs, l'investissement étant pratiquement identique.

Alors que le dispositif classique ne permet pas d'atteindre plus de 1.000 vpm $NO_x$, la présente invention permet d'abaisser cette teneur à 660 vpm, sans utilisation d'eau oxygénée et de 210 vpm (ou moins) avec utilisation d'eau oxygénée.

La comprehension de ces résultats sera plus aisée si on se réfère au graphique $NO_x = f(NO/NO_2)$ de la figure 5 car l'optimisation d'une cellule d'assainissement de $NO_x$ impose de "situer" le gaz a traiter par rapport aux trois zones décrites plus haut.

On se place au point $A_0$ ($NO_x$ = 1200, $NO/NO_2 = 2$) correspondant au gaz initial.

Les lois générales, tirées des nombreuses expériences effectuées, permettent de conclure, dans les conditions de fonctionnement ci-dessus, que:

- le point $A_0$ est pratiquement sur la ligne de séparation des zones I et II, c'est-à-dire qu'une bonne efficacité d'absorption ne pourra être obtenue qu'en favorisant l'oxydation de $HNO_3$ en phase liquide (étape a)
- la ligne de séparation des zones II et III est pratiquement la verticale $NO/NO_2 = 4$.

On suit alors l'évolution du gaz selon les dispositifs utilisés:

**CAS N° 1**

La technologie classique, correspondant à un coefficient K très faible, favorise l'oxydation en phase gaz au détriment de l'oxydation en phase liquide; comme la cinétique d'oxydation en phase gaz devient très lente, l'efficacité globale est faible: on aboutit au point $A_1$, avec un rapport $NO/NO_2$ petit.

## CAS N° 2

La technologie mettant en oeuvre le procédé selon la demande européenne n° 47 191 correspond, au contraire, à un coefficient K bien plus important; elle favorise donc l'oxydation en milieu liquide de $HNO_2$ et permet ainsi d'atteindre le point $A_2$, correspondant à un rapport $NO/NO_2$ légèrement supérieur à 4.

La mesure du couple ($NO_x$, $NO/NO_2$), en divers points de la colonne, permet de tracer la ligne $A_0$, $A'_1$, $A_2$ qui représente l'évolution du gaz; on constate que:

- le point $A'_1$, situé sur la ligne frontière entre les zones II et III, est atteint en sortie du 6ème plateau.

La ligne $A_0$ $A'_1$ correspond exactement à l'étape (a) décrite ci-dessus; elle se situe à droite de la ligne $A_0$ $A_1$, ce qui s'explique par le fait que, d'une part, l'appauvrissement en $NO_2$ est plus rapide (K plus grand) et, d'autre part, l'oxydation en phase gaz est plus faible (R plus petit et 6 plateaux au lieu de 13).

- au-delà du point $A'_1$, on passe dans la zone III ou la vitesse limitante est celle de l'oxydation en phase gaz: l'efficacité devient très faible puisqu'il faut 7 plateaux pour passer de $A'_1$ à $A_2$.

D'où l'application de la présente invention qui consiste, à partir de $A'_1$, à revenir dans la zone II, réalisable par une oxydation (étape b).

## CAS N° 3

<u>Oxydation par $HNO_3$</u>

On établit une boucle de recirculation (1) d'acide $HNO_3$, de normalité 4N, selon le schéma de la figure 3, sur le plateau n° 7 (An +1), l'acide du plateau 8 (An + 2) et envoyé directement sur le plateau 6 (An), l'acide nitrique étant introduit en (2).

Dans ces conditions, la ligne représentative devient $A_0$ $A'_1$ $B_1$ $A_3$.

La boucle de réoxydation réduit le rapport $NO/NO_2$ sans augmenter sensiblement $NO_x$ (ligne $A'_1$ $B_1$) et l'étape (a) se réalise à nouveau sur les plateaux 8 à 13 (ligne $B_1$ $A_3$).

Il est donc possible, selon l'invention, de rajouter un étage d'oxydation pour abaisser encore le seuil final, en décrivant la ligne $A_3$ $B_2$ $A'_4$ (fig. 1), mais cette solution implique d'ajouter quelques étages d'absorption alors que l'on peut atteindre ce résultat sans investir dans un volume supplémentaire de colonne, en ajoutant, selon le cas n° 4, un étage final avec oxydation à $H_2O_2$.

## CAS N° 4

<u>Oxydation par $HNO_3$ et $H_2O_2$</u>

Reprenant le dispositif du cas n° 3, on incorpore au niveau du plateau 12, une boucle de réoxydation à $H_2O_2$ selon fig. 4; la ligne représentative de l'évolution du gaz dans la colonne devient alors:

$A_0$ $A'_1$ (étape a) du plateau 1 au plateau 6

$A'_1$ $B_1$ (étape b) sur plateau 7

$B_1$ $B'_1$ (étape a) du plateau 7 au plateau 11

$B'_1$ $A_4$ sur plateaux 12 et 13

On utilise ainsi au mieux le volume disponible, tout en minimisant la quantité de $H_2O_2$ utilisée, cette quantité étant proportionnelle à la différence des ordonnées de $A_4$ $A_3$ ($h_2$) (alors qu'en utilisant l'eau oxygénée dans une colonne classique, et en admettant que les conditions permettent d'atteindre le point $A_4$, ce qui n'est pas évident, on aurait consommé une quantité proportionnelle à l'ordonnée de $A_1$ $A_4$) (soit $h_1$).

Comme indiqué plus haut, la mise en oeuvre de l'eau oxygénée doit être telle que, d'une part, il n'y ait pas blocage de l'oxydation de NO par $HNO_3$ et que, d'autre part, la quantité éliminée par la purge soit minimale, c'est-à-dire, dans le cas présent, le mélange en recirculation composé d'un acide nitrique de titre 4N et d'eau oxygénée à 4 volumes; la purge est renvoyée dans la boucle de recirculation du plateau 7, améliorant ainsi son efficacité, en éliminant partiellement le $HNO_2$ dissous dans l'acide.

**Comparaison des performances des divers dispositifs pour une colonne de même valeur, équipée du même nombre de plateaux**

| Cas | | 1 | 2 | 3 | 4 |
|---|---|---|---|---|---|
| | | Colonne selon FR 1 255 373 | Colonne selon E.P. 47 191 | Colonne selon invention (1 étage oxydation $HNO_3$) | Colonne selon invention 1 étage $HNO_3$ + 1 étage $H_2O_2$ |
| TECHNOLOGIE INTERNE | | | | | |
| Nombre plateaux | | 13 | 13 | 13 | 13 |
| R | | 10 | 2,2 | 2,2 | 2,2 |
| $10^4$ K (heure) | | 1,4 | 6,3 | 6,3 | 6,3 |
| Plateau réoxydation | | 0 | 0 | 1 | 2 |
| $NO_x$ entrée | Vpm | 1200 | 1200 | 1200 | 1200 |
| | $NO/NO_2$ (rapport molaire) | 2 | 2 | 2 | 2 |
| $NO_x$ sortie | Vpm | 1000 | 750 | 660 | 210 |
| | $NO/NO_2$ | 2,4 | 4,1 | 4 | 4,2 |
| Efficacité | $\frac{NOXE - NOXS}{NOXE}$ | 0,154 | 0,375 | 0,450 | 0,825 |
| Perte de charge en Pa | | 10000 | 25000 | 24000 | 24000 |
| Consommation équivalente (1) $H_2O_2$ | | | | | $30\ 10^{-5}$ |

(1) exprimée en $Nm^3$ d'oxygène par $Nm^3$ de gaz à traiter

R = Rapport du volume de colonne compris entre deux plateaux successifs en volume occupé par l'émulsion gaz-liquide entre ces plateaux successifs

**Revendications**

1. Procédé d'oxydo-réduction des oxydes d'azote contenus dans un courant gazeux conjointement à l'oxygène, dans un dispositif de contact gaz-liquide à contre-courant, caractérisé par le fait que:

a) pour des valeurs du rapport $NO/NO_2$ supérieur à 1, on augmente le rapport K du volume de rétention liquide en $m^3$ au débit du courant gazeux en $Nm^3$/heure, de façon que les $NO_x$ s'absorbent préférentiellement selon la réaction:

$$NO + NO_2 + H_2O \rightarrow 2H\ NO_2 \text{ (phase liquide)}$$

b) on provoque ensuite une oxydation du milieu gazeux de manière à diminuer les valeurs du rapport $NO/NO_2$ et à se replacer dans les conditions de l'étape (a), cette oxydation étant réalisée par apport d'acide nitrique et d'eau oxygénée avec comme condition qu'on apporte celle-ci de telle sorte que le point représentatif de la concentration (V) en volume de $H_2O_2$ par rapport à la normalité (N) de la solution nitrique d'$H_2O_2$ soit situé dans une zone (B) située au-dessus de la courbe (C1) qui fait correspondre à chaque valeur de (V) une valeur minimale de (N), valeur minimale en-dessous de laquelle il n'y a pas oxydation de NO en $NO_2$, et de la courbe (C2) qui fait correspondre à chaque valeur de (V) une valeur maximale de (N), valeur maximale au-dessus de laquelle il y a apparition de $NO_2$ en phase gazeuse,

c) on répète au moins une fois l'étape (a).

2. Procédé selon la revendication 1, caractérisé par le fait que, préalablement à l'étape (a), pour des valeurs de $NO/NO_2$ inférieures à 1, on abaisse d'abord la teneur en $NO_x$ du courant gazeux par absorption en phase liquide du $NO_2$.

3. Procédé selon l'une des revendications 1 et 2, caractérisé par le fait que l'on met en oeuvre le procédé dans une colonne d'oxydo-absorption.

4. Procédé selon la revendication 3, caractérisé par le fait que l'on favorise l'oxydation en phase gazeuse entre les plateaux et l'absorption du $NO_2$ sur les plateaux.

5. Procédé selon l'une des revendications 1 à 4, caractérisé par le fait qu'aux étapes (a) et (b), on augmente le temps de séjour de la solution aqueuse dans la partie du dispositif pour laquelle la teneur en $NO_x$ du courant gazeux est inférieure à 6 000 vpm, à une valeur telle que le rapport K du volume de rétention liquide en $m^3$, dans ladite partie du dispositif, au débit du courant gazeux en $Nm^3$/heure soit supérieur à $5.\ 10^{-4}$ heure pour

6 000 vpm.

6. Procédé selon l'une des revendications précédentes, caractérisé par le fait que l'on introduit les oxydants par pulvérisation.

7. Procédé selon l'une des revendications précédentes, caractérisé par le fait que l'on introduit les oxydants par l'intermédiaire d'une boucle de recirculation.

**Patentansprüche**

1. Verfahren zur Oxidation-Reduktion der in einem Gasstrom zusammen mit Sauerstoff enthaltenen Stickstoffoxide in einer Vorrichtung, die Gas und Flüssigkeit im Gegenstrom in Kontakt bringt, dadurch gekennzeichnet, daß:

a) man bei Werten für das Verhältnis $NO/NO_2$ oberhalb von 1 das Verhältnis K von flüssigem Retentionsvolumen in $m^3$ zum Durchsatz des Gasstroms in $Nm^3$/Stunde erhöht, so daß die $NO_x$ vorzugsweise absorbiert werden gemäß der Reaktion:

$NO + NO_2 + H_2O \rightarrow 2H\,NO_2$ (flüssige Phase)

b) man anschließend eine Oxidation der Gasphase derart bewirkt, daß die Werte des Verhältnisses $NO/NO_2$ gesenkt werden und die Bedingungen des Schritts (a) wieder hergestellt werden, wobei diese Oxidation durch Zuführen von Salpetersäure und Wasserstoffperoxid bewirkt wird, wobei man dieses unter der Bedingung und in solcher Weise zuführt, daß der die Volumenkonzentration (V) an $H_2O_2$ bezogen auf die Normalität (N) der Salpetersäurelösung von $H_2O_2$ darstellende Wert in einer Zone (B) oberhalb der Kurve (C1) liegt, die jedem Wert für (V) einen minimalen Wert für (N) zuordnet, unterhalb dessen keine Oxidation von NO zu $NO_2$ stattfindet, und oberhalb der Kurve (C2), die jedem Wert für (V) einen maximalen Wert für (N) zuordnet, oberhalb dessen $NO_2$ in der Gasphase auftritt,

c) und daß man wenigstens einmal den Schritt (a) wiederholt.

2. Verfahren nach Anspruch 1, dadurch gekennzeichnet, daß man bei Werten für $NO/NO_2$ unterhalb von 1 vor dem Schritt (a) zunächst den Gehalt an $NO_x$ des Gasstroms durch Absorption des $NO_2$ in der flüssigen Phase absenkt.

3. Verfahren nach einem der Ansprüche 1 und 2, dadurch gekennzeichnet, daß man das Verfahren in einer Oxidations-Absorptionskolonne durchführt.

4. Verfahren nach Anspruch 3, dadurch gekennzeichnet, daß man die Oxidation in der Gasphase zwischen den Böden und die Absorption des $NO_2$ auf den Böden begünstigt.

5. Verfahren nach einem der Ansprüche 1 bis 4, dadurch gekennzeichnet, daß man in den Schritten (a) und (b) die Verweilzeit der wässrigen Lösung in demjenigen Teil der Vorrichtung, für den der Gehalt an $NO_x$ des Gasstroms unterhalb von 6000 vpm liegt, auf einen solchen Wert erhöht, daß das Verhältnis K von flüssigem Retentionsvolumen in $m^3$ in diesem Teil der Vorrichtung zu Durchsatz des Gasstroms in $Nm^3$/Stunde für 6000 vpm größer als $5 \cdot 10^{-4}$ Stunden ist.

6. Verfahren nach einem der vorhergehenden Ansprüche, dadurch gekennzeichnet, daß man die Oxidationsmittel durch Zerstäubung zuführt.

7. Verfahren nach einem der vorhergehenden Ansprüche, dadurch gekennzeichnet, daß man die Oxidationsmittel über eine Rückführschleife zuführt.

**Claims**

1. A process for the oxido-reduction of nitrogen oxides contained in a gaseous flow jointly with oxygen in a counter-flow gas-liquid contact apparatus characterised in that:

a) for values of the ratio $NO/NO_2$ of higher than 1, the ratio K of the volume of liquid retention in $m^3$ to the flow rate of the gaseous flow in $Nm^3$/hour is increased so that the $NO_x$ are preferentially absorbed in accordance with the reaction:

$NO + NO_2 + H_2O \rightarrow 2H\,NO_2$ (liquid phase)

b) oxidation of the gaseous medium is then caused so as to reduce the values of the ratio $NO/NO_2$ and to return to the conditions of step (a), said oxidation operation being carried out by a supply of nitric acid and oxygenated water with the condition that the latter is supplied in such a way that the point representative of the concentration (V) by volume of $H_2O_2$ with respect to normality (N) of the nitric solution of $H_2O_2$ is in a zone (B) above the curve (C1) which causes a minimum value of (N) to correspond to each value of (V), below which minimum value there is no oxidation of NO to $NO_2$, and the curve (C2) which causes a maximum value of (N) to

correspond to each value of (V), above which maximum value $NO_2$ appears in the gaseous phase, and

c) step (a) is repeated at least once.

2. A process according to claim 1 characterised in that prior to step (a), for values of $NO/NO_2$ of lower than 1, the proportion of $NO_x$ in the gaseous flow is first lowered by liquid phase absorption of the $NO_2$.

3. A process according to one of claims 1 and 2 characterised in that the process is carried out in an oxido-absorption column.

4. A process according to claim 3 characterised by promoting gaseous phase oxidation between the plates and the absorption of $NO_2$ on the plates.

5. A process according to one of claims 1 to 4 characterised in that in steps (a) and (b), the residence time of the aqueous solution in the part of the apparatus in respect of which the proportion of $NO_x$ in the gaseous flow is lower than 6000 vpm is increased to a value such that the ratio K of the volume of liquid retention in $m^3$ in said part of the apparatus to the flow rate of the gaseous flow in $Nm^3$/hour is higher than $5.10^{-4}$ hour for 6000 vpm.

6. A process according to one of the preceding claims characterised in that the oxidising agents are introduced by spraying.

7. A process according to one of the preceding claims characterised in that the oxidising agents are introduced by means of a recirculation loop.

FIG.1

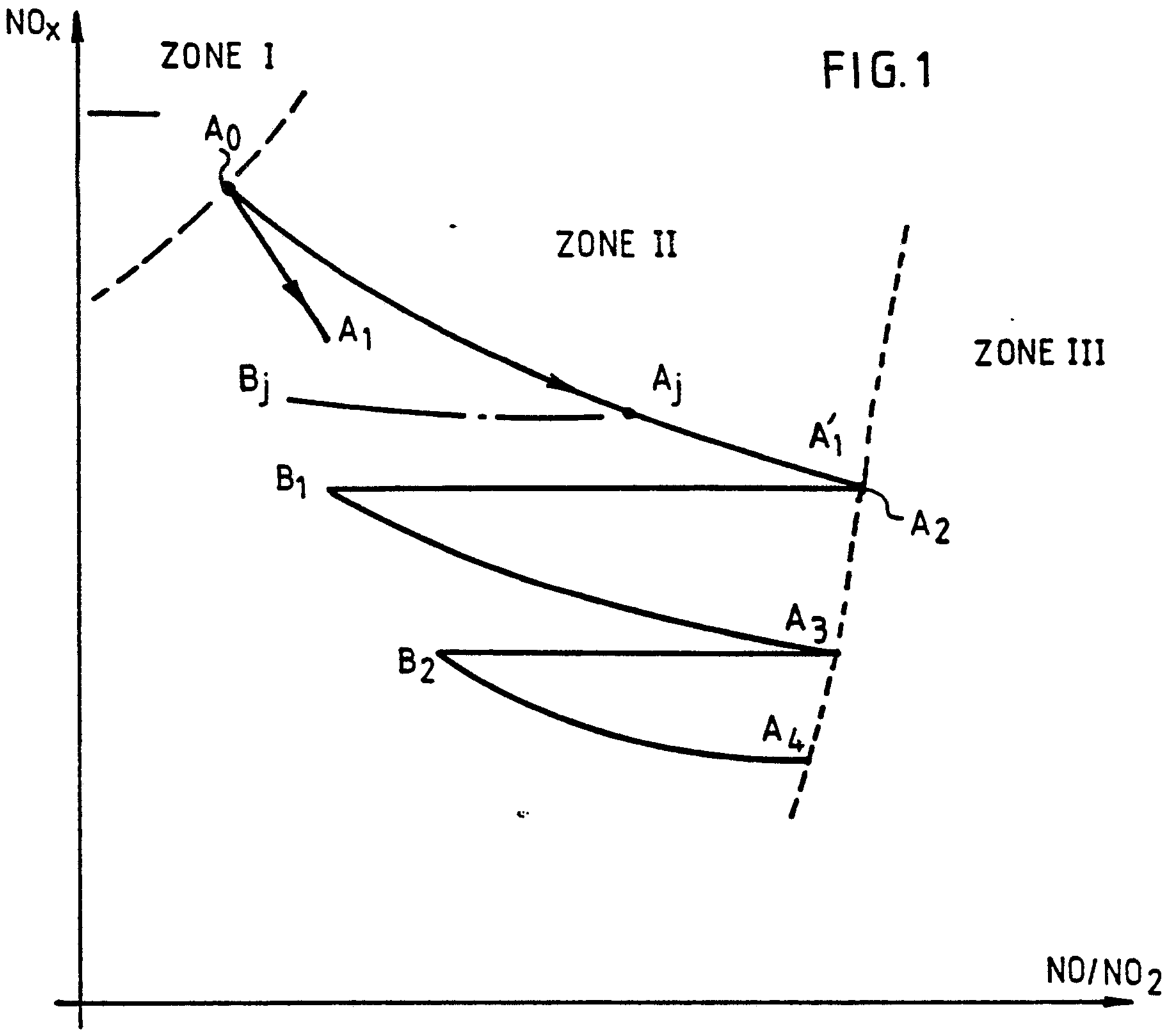


FIG. 3

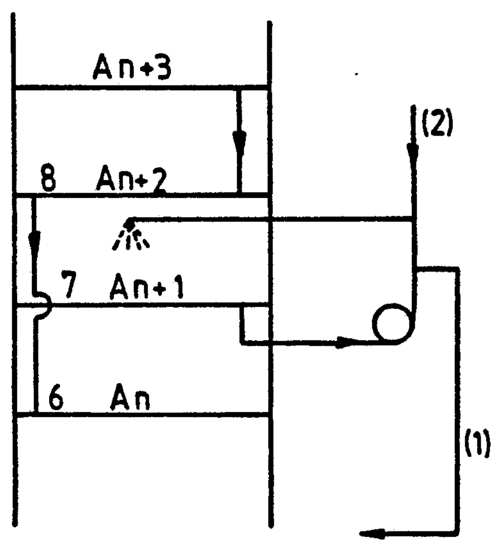


FIG. 4

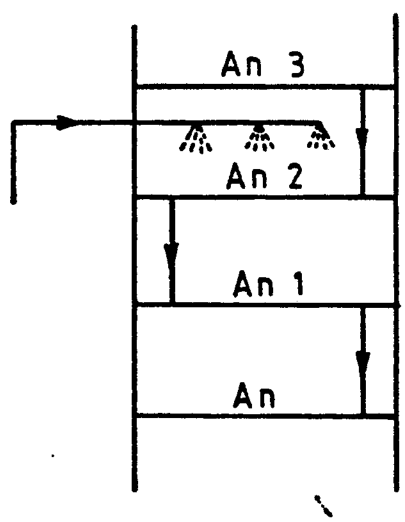

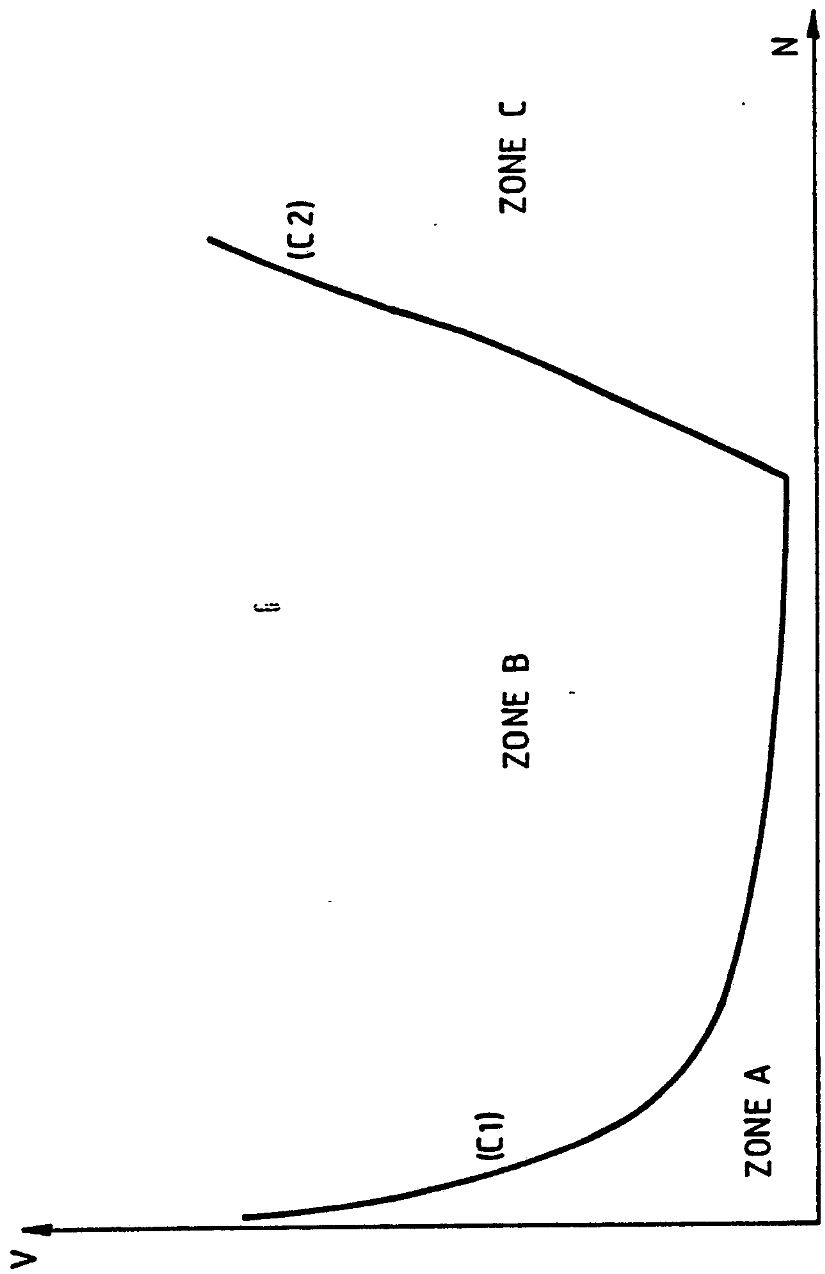


FIG. 2

FIG.5

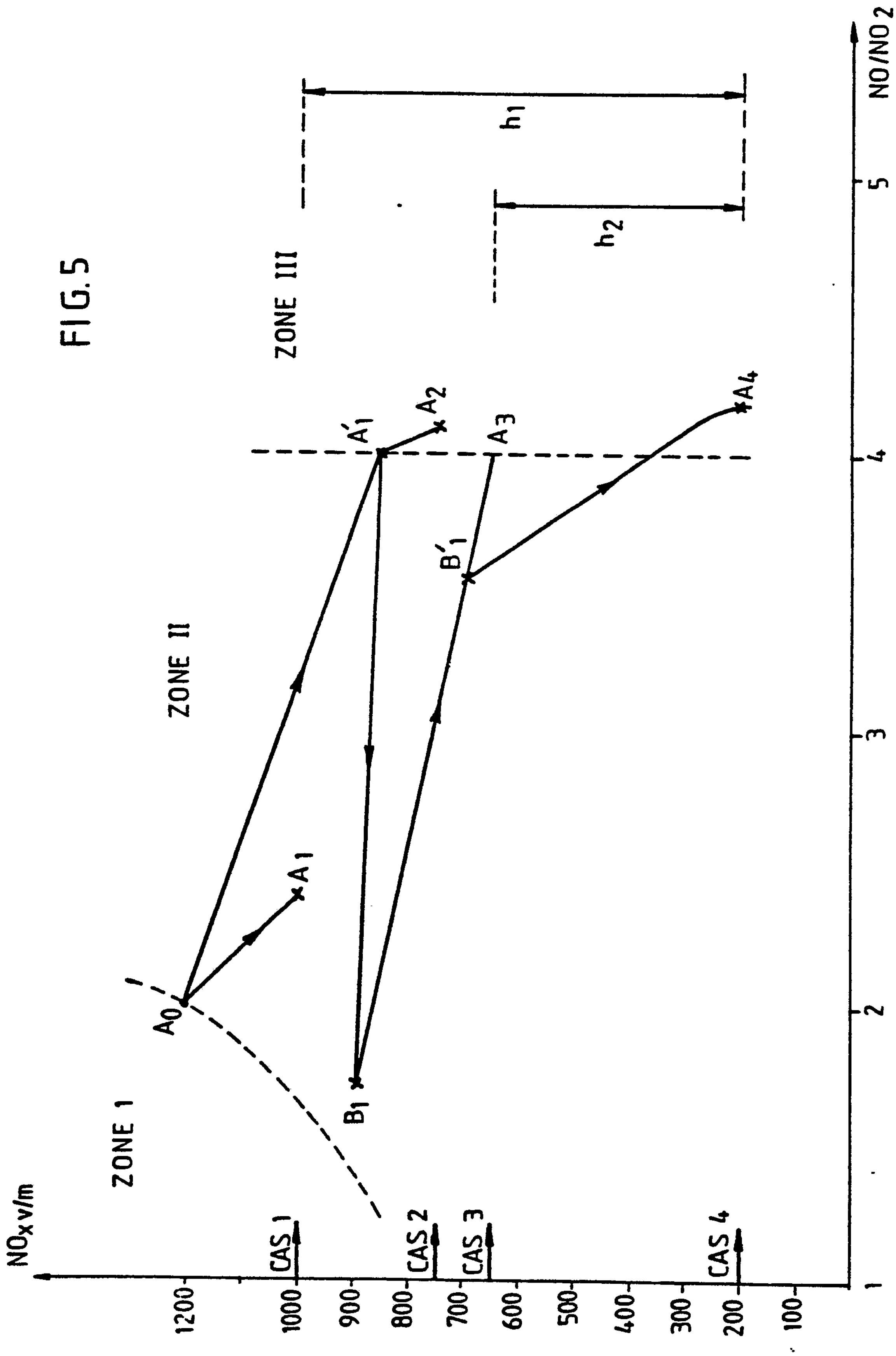

NOx v/m
NO/NO2
ZONE 1
ZONE II
ZONE III
CAS 1
CAS 2
CAS 3
CAS 4
A0
A1
A'1
A2
A3
A4
B1
B'1
h1
h2
1200
1000
900
800
700
600
500
400
300
200
100
1
2
3
4
5